# EUROPÄISCHE PATENTSCHRIFT

(11) **EP 0 546 408 B1**
(45) Veröffentlichungstag und Bekanntmachung des Hinweises auf die Patenterteilung: **10.01.1996**
(21) Anmeldenummer: 92120403.8
(22) Anmeldetag: 28.11.1992
(51) Int. Cl.: C08G 77/38, C08G 77/28, C08G 77/04, C07F 7/08

(54) **Polysiloxane mit mindestens einer Si-C-gebundenen Sulfatohexylgruppe**
Polysiloxanes containing at least one Si-C linked sulfatohexyl group
Polysiloxanes contenant au moins un groupe sulfatohexyl lié par une liaison Si-C

(30) Priorität: 13.12.1991 DE 4141046
(43) Veröffentlichungstag der Anmeldung: 16.06.1993
(73) Patentinhaber: Th. Goldschmidt AG, D-45127 Essen (DE)
(72) Erfinder: Busch, Stefan, W-4300 Essen 1 (DE); Lersch, Peter, Dr., W-4200 Oberhausen 12 (DE); Schaefer, Dietmar, Dr., W-4320 Hattingen 16 (DE); Wewers, Dietmar, Dr., W-4250 Bottrop (DE)

(56) Entgegenhaltungen:
- DE-B- 1 157 789
- DE-B- 1 219 613
- US-A- 3 997 580
- US-A- 4 960 845

## Beschreibung

Die Erfindung betrifft Polysiloxane mit mindestens einer Si-C-gebundenen Sulfatohexylgruppe, Verfahren zu ihrer Herstellung und deren Verwendung als hydrolysestabile Tenside.

Aus der DE-PS 11 57 789 ist ein Verfahren zur Herstellung von Organosiliciumverbindungen, die die Gruppierung 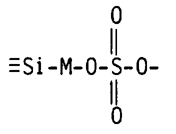 aufweisen (M = beliebige zweiwertige, gegebenenfalls halogenierte Kohlenwasserstoffreste), mit dem Kennzeichen bekannt, daß man Organosiliciumverbindungen, die die Gruppierung ≡Si-M-O-X tragen (X = Wasserstoff- oder Acylrest), mit Schwefelsäure oder Schwefeltrioxid, Chlorsulfonsäure oder Amidosulfonsäure bei Temperaturen bis zu 180°C umsetzt und die Reaktionsprodukte gegebenenfalls äquilibriert und/oder hydrolysiert. Als Organosiliciumverbindung können Organopolysiloxane der allgemeinen Formel

[RₙSiO_{2-1/2n}]ₓ [RₙSi(MOH)ₘO_{2-1/2(n+m)}]_{y}

[RₙSi(MOCOR)ₘO_{2-1/2(n+m)}]_{z}

verwendet werden, wobei M wie oben definiert ist, R beliebige, gegebenenfalls halogenierte Kohlenwasserstoffreste oder Wasserstoff bedeutet, n, m einen Wert von 0 bis 3 haben und x, y und z beliebige Werte annehmen können.

In der Beschreibung und den Beispielen sind für den Rest M die geradkettigen Reste -C₃H₆-, -C₃H₅Cl- und -C₄H₈- explicite genannt. Die Verbindungen können in ihre Salze, insbesondere Ammoniumsalze überführt werden. Sie sind zum Imprägnieren von Textilien, Leder, Glas, Holz oder Mauerwerk geeignet oder können als Emulgatoren oder waschaktive Substanzen verwendet werden.

Aus der DE-OS 15 95 775 sind sulfatgruppenhaltige Organosiliciumverbindungen der allgemeinen Formel 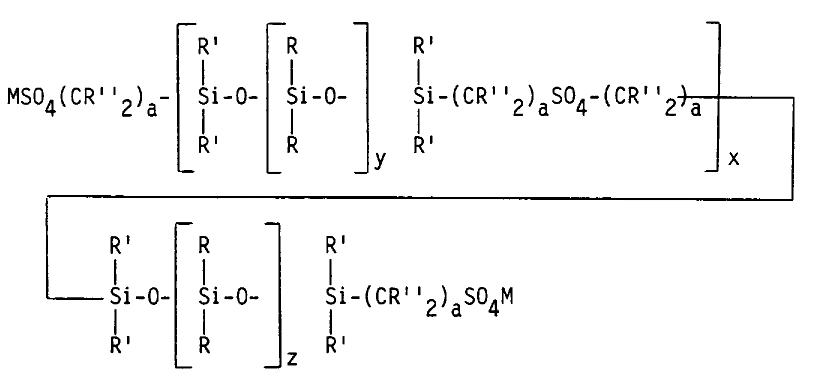 bekannt, in der M Natrium oder Kalium, R einen Alkylrest mit 1 bis 3 Kohlenstoffatomen, R' einen einwertigen von aliphatischer Ungesättigtheit freien Kohlenwasserstoffrest mit mehr als 7 Kohlenstoffatomen, R'' das gleiche wie R' oder Wasserstoff, a eine Zahl von 3 bis 8, x null oder eine Zahl von 1 bis 10, y null oder eine Zahl von 1 bis 150 und z null oder eine Zahl von 1 bis 150 bedeuten. Diese Verbindungen sind denen der DE-PS 11 57 789 vergleichbar. Während in der DE-PS 11 57 789 Verfahren zur Herstellung von Organopolysiloxanen beschrieben sind, welche Sulfatoalkylgruppen seitenständig aufweisen, handelt es sich bei den Verbindungen der DE-OS 15 95 775 um analoge Verbindungen, welche die Sulfatoalkylgruppen in α,ω-Stellung aufweisen.

Überraschenderweise wurde nun gefunden, daß die Salze der entsprechenden Hexylsulfatester hervorragende tensidische Eigenschaften mit überdurchschnittlicher Hydrolysestabilität verbinden. Dieses Verhalten ließ sich durch Extrapolation der Eigenschaften der nächstniederen bzw. nächsthöheren homologen Alkylsulfatester nicht vorhersehen und ist deshalb für den Fachmann überraschend.

Ein Gegenstand der Erfindung sind deshalb Polysiloxane der allgemeinen Formel 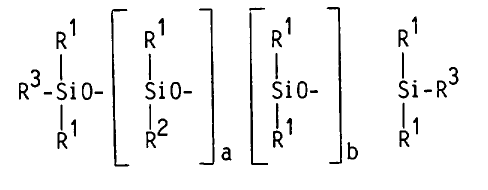
- R¹: = Methyl- oder Phenylrest, wobei jedoch mindestens 90 % der R¹-Reste Methylreste sind,
- R: = R¹ oder
= -(CH₂)₆-OSO₃ ^{⊖} . M^{⊕},
M^{⊕} = Alkali-, 1/2 Erdalkali- oder gegebenenfalls alkylsubsti tuiertes Ammonium-Ion,
- R³: = R¹ oder R, mit der Maßgabe, daß im durchschnittlichen Molekül mindestens 1 Rest R oder R³ ein -(CH₂)₆-OSO₃ ^{⊖} . M^{⊕}-Rest ist,
- a: = 0 bis 5,
- b: = 0 bis 5.

Besonders bevorzugt sind dabei Polysiloxane, bei denen die Reste und Indices alleine oder in Kombination folgende Bedeutung bzw. Werte haben:
- R¹: = Methylrest,
- M^{⊕}: = Alkylammonium-Ion, wobei der Alkylrest 1 bis 10 Kohlenstoffatome aufweist,
- R³: = R¹,
- a: = 0 oder 1,
- b: = 0.

Erfindungsgemäße Verbindungen, bei denen M^{⊕} ein Alkylammonium-Ion mit 1 bis 4 Kohlenstoffatomen ist, sind niedrigviskos und deshalb besonders leicht zu handhaben. Sie bilden stark schäumende, wäßrige Lösungen. Mit steigender Kohlenstoffanzahl im Alkylammoniumrest sinkt die Tendenz zur Schaumbildung in wäßrigen Lösungen. Dies ist bei vielen technischen Anwendungen von besonderem Interesse.

Ein weiterer Gegenstand der Erfindung besteht in der Herstellung der erfindungsgemäß ausgewählten Polysiloxane und ist dadurch gekennzeichnet, daß man Polysiloxane der allgemeinen Formel 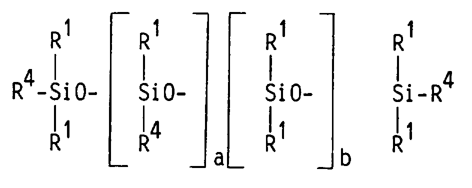
R¹, a und b wie oben definiert,
R⁴ = R¹ oder -(CH₂)₆-OH, mit der Maßgabe, daß im durchschnittlichen Molekül mindestens 1 Rest R⁴ ein -(CH₂)₆-OH-Rest ist, mit in bezug auf -(CH₂)₆-OH-Gruppen mindestens äquimolaren Mengen Amidosulfonsäure bei Raumtemperatur oder mäßig erhöhter Temperatur umsetzt und gegebenenfalls das Ammonium-Ion in an sich bekannter Weise gegen das gewünschte M^{⊕}-Ion austauscht.

Das Verfahren kann in Gegenwart eines inerten Lösungsmittels durchgeführt werden. Beispiel eines geeigneten inerten Lösungsmittels ist N-Methylpyrrolidon oder Dimethylformamid.

Die Reaktion läuft bereits bei Raumtemperatur ab. Durch Erwärmen auf mäßig erhöhte Temperaturen, wie etwa 40 bis 90°C, kann die Umsetzung noch beschleunigt werden. Das bei der Umsetzung entstehende Ammoniumsalz kann durch eine Metathesereaktion mit Alkylaminen unter Abspaltung von Ammoniak leicht in das entsprechende Alkylammoniumsalz überführt werden. Durch Verwendung entsprechender Alkylamine können die Eigenschaften der erhaltenen Sulfatestersalze modifiziert werden. Dies bezieht sich insbesondere auf das Netzvermögen und das Schaumvermögen.

Dabei ist dem Fachmann bekannt, daß die kritische Micellbildungskonstante [ cmc ] in wäßrigen Lösungen, die eine wichtige Größe zur Charakterisierung des tensidischen Verhaltens einer Verbindung ist, vom Bindungsgrad des Gegenions zum Tensidrest abhängt. So nimmt durch eine verstärkte Bindung des Gegenions zum Tensidrest die cmc des Tensids ab. Der Grad der Bindung ist dabei abhängig von der Polarisierbarkeit, der Valenz und der Hydrathülle des Gegenions. Daher werden die tensidspezifischen Eigenschaften, wie Schaum- und Netzvermögen, Löslichkeit und Oberflächenspannungserniedrigung, einer Verbindung nicht nur vom Tensidrest, sondern auch vom Gegenion beeinflußt. Demnach ist es verständlich, daß bei der Vielzahl der zur Verfügung stehenden organischen Alkylammoniumkationen und der technisch sehr einfachen Überführungsmethode der beanspruchten Verbindung in die entsprechenden Alkylammoniumderivate natürlich auch eine Vielzahl von Verbindungen mit anwendungstechnisch wertvollen Eigenschaften hergestellt werden kann.

Ein weiterer Gegenstand der Erfindung ist die Verwendung der erfindungsgemäßen Verbindungen als hydrolysestabile Tenside, insbesondere als Emulgatoren; zur Modifizierung der Eigenschaften von Oberflächen, wie z.B. als Additive in Antistatikausrüstungen oder bei der Imprägnierung; als hervorragende Netzmittel in wäßrigen Lösungen schon bei sehr geringen Anwendungskonzentrationen; als Hilfs- oder Zusatzstoffe oder synergistische Formulierungsbestandteile in Verdickungsmitteln, Antistatika, Textilhilfsmitteln, fotographischen Filmen, Waschmitteln, technischen Reinigern, ionenselektiven Elektroden; in der Galvanotechnik; bei der tert. Erdölförderung; in Feuerlöschmitteln; in Schaumstabilisatoren, Schnelldrucktinten, Klebstoffen und wasserlöslichen Farbstoffen.

In den folgenden Beispielen wird die Herstellung der erfindungsgemäßen Verbindungen noch näher erläutert, und es werden deren besondere Eigenschaften gezeigt.

### 1. Herstellung der Ausgangsverbindungen

Zunächst wird in an sich bekannter Weise das beim erfindungsgemäßen Verfahren als Edukt dienende Trisiloxanderivat hergestellt.

225 g (1,0 Mol) 1,1,1,3,5,5,5-Heptamethyltrisiloxan werden dazu mit 9,2 mg (= 20 ppm Pt) Hexachloroplatinsäure H₂PtCl₆ in einem 500-ml-Vierhalskolben, ausgestattet mit Rührer, Tropftrichter, Thermometer und Rückflußkühler, vorgelegt und unter Rühren auf 120°C aufgeheizt. Bei dieser Temperatur werden 115 g (1,15 Mol) 5-Hexen-1-ol derart zugetropft, daß trotz einsetzender exothermer Reaktion eine Temperatur von 140°C nicht überschritten wird. Nach Zutropfende wird die Reaktionsmischung weiter bei 120°C gehalten und das Zeit-Umsatzverhalten über den SiH-Wert verfolgt. Bei einem Umsatz von > 99 % wird die Reaktion abgebrochen und die Pt-Katalysatorreste aus der Reaktionsmischung durch Filtration entfernt. Durch Destillation im Vakuum werden der Überschuß an Hexenol und flüchtige Nebenprodukte abdestilliert. Analytische Untersuchungen mittels ¹H-, ¹³C- und ⁹Si-NMR bestätigen, daß das Hydrosilylierungsprodukt die erwartete Struktur Me₃SiO(HOCH₂(CH₂)₄CH₂SiMeO)SiMe₃ besitzt.

### 2. Herstellung erfindungsgemäßer Verbindungen

### Beispiel 1

300 g (0,92 Mol) des in Beispiel 1 hergestellten 3-(1-Hydroxyhexyl)-2-Methyl-1,1,5,5-tetramethyltrisiloxans werden mit 75 g N,N-Dimethylformamid in einem Dreihalskolben, ausgestattet mit Rührer, Pulvertrichter und Stickstoffeinleitungsrohr, unter Rühren gemischt. Danach wird die Luft durch Überleiten von Stickstoff aus dem Reaktionsgefäß entfernt. Unter der Stickstoffatmosphäre werden unter Rühren 93,9 g (0,97 Mol, 5 % Überschuß) fein pulverisierte Amidosulfonsäure zugegeben. Danach wird innerhalb von 30 Minuten auf 75°C aufgeheizt und weitere 5 Stunden bei dieser Temperatur gerührt. Mit zunehmender Reaktionszeit unter dem Ablauf einer leichten Exothermie dickt der Kolbeninhalt zu einer weißgelben, pastösen Masse ein. Nach dem Reaktionsende wird die Reaktionsmasse unter Rühren mit 60 g i-Propanol versetzt und nicht umgesetzte Amidosulfonsäurereste aus dem Produkt heiß abfiltriert. Durch kurzes Einleiten von gasförmigem Ammoniak in die Reaktionsmasse werden im Produkt gelöste Säurereste neutralisiert. Danach werden N,N-Dimethylformamid, i-Propanol und Nebenprodukte der Reaktion, wie Hexamethyldisiloxan, im Vakuum bei Temperaturen von 70 bis 80°C und einem Druck von ca. 2 Torr abdestilliert.

Spektroskopische Untersuchungen mittels ¹H-, ¹³C- und ⁹Si-NMR zeigen, daß der Umsatz bei der Sulfatierung 99,2 % beträgt und das Reaktionsprodukt im wesentlichen der erwarteten Struktur Me₃SiO(NH₄ ^{⊕⊖} O₃SOCH₂(CH₂)₄CH₂SiMeO)SiMe₃ entspricht. Da unter den Reaktionsbedingungen unter Hexamethyldisiloxanabspaltung auch Teilabbaureaktionen an der Siloxankette stattfinden, sind daneben im Produkt auch geringe Mengen Oligomere des Typs M-D'ₙ-M mit n = 2 bis 5 und D' = NH4^{⊕⊖} O₃SOCH₂(CH₂)₄CH₂SiMeO zu finden. Dies wird auch bei der Tensid-Schwefelgehalt-Analyse des Produkts deutlich, da der erhaltene Wert mit 7,4 % ein wenig über dem theoretischen Wert von 7,1 % liegt.

Das in 85 %iger Ausbeute erhaltene, pastöse weißgelbe Ammonium-Heptamethyltrisiloxanhexylsulfat läßt sich klar in Wasser lösen, schäumt sehr stark beim Schütteln und besitzt hervorragende Netzmitteleigenschaften. Wie nachstehend angeführt, zeigen Messungen der statischen Oberflächenspannung dieser wäßrigen Lösungen bereits bei geringen Einsatzkonzentrationen an Reaktionsprodukt eine ausgezeichnete tensidische Aktivität, die sich in einer besonders wirksamen Oberflächenspannungserniedrigung ausdrückt.

| Konzentration (Gew.-%) | Oberflächenspannung (mN/m) (T = 20°C) |
|---|---|
| 1,0 | 19,8 |
| 0,25 | 20,1 |
| 0,10 | 20,2 |
| 0,025 | 21,1 |

### Vergleichsbeispiel

Es werden, wie oben beschrieben, in an sich bekannter Weise als weitere Ausgangsverbindungen hydroxyalkylfunktionelle Trisiloxanderivate durch Platin-katalysierte Anlagerung von Allylalkohol, 3-Buten-1-ol oder 10-Undecen-1-ol an Heptamethyltrisiloxan hergestellt. Daran anschließend werden auch diese mit Amidosulfonsäure sulfatiert und in die entsprechenden Ammoniumsalzverbindungen überführt. Die so hergestellten Kontrollverbindungen werden bezüglich ihrer tensidspezifischen Eigenschaften mit dem Reaktionsprodukt aus Beispiel 1 verglichen.

Dazu werden zunächst jeweils wäßrige Lösungen mit einer Konzentration von 1 Gew.-% Produkt hergestellt und deren Oberflächenspannung ermittelt. Zur Ermittlung des Netzvermögens wird die Spreitung eines 50-µlTropfens der 1 %igen Tensid-Lösung auf einer Polypropylenfolie über die maximale Flächenausdehnung gemessen. Reines Wasser liefert unter diesen Bedingungen einen Blindwert von 8 mm. Die Langzeithydrolysestabilität wird ebenfalls über diese Methode ermittelt: es ist der Zeitraum angegeben, in dem ein Tropfen der gealterten Lösung immer noch den Anfangsspreitwert erreicht.

Die Ergebnisse sind nachstehend tabellarisch angeführt.

| Produkt | Lösung | Oberflächenspannung (mN/m) | Spreitung (mm/PP-Folie) | Langzeithydrolysetest (20°C, pH 7) |
|---|---|---|---|---|
| Beispiel 1 | klar | 19,8 | 65 | > 120 d |
| HMTS-C₃-SO₄ | leicht trüb | 20,1 | 35 | 14 d |
| HMTS-C₄-SO₄ | klar | 20,7 | 40 | 21 d |
| HMTS-C₁₁-SO₄ | trüb | 23,7 | 20 | n.b. |

Man erkennt, daß zwar alle Produkte tensidische Eigenschaften aufweisen, aber nur beim Trisiloxanhexylsulfat-Ammoniumsalz (Beispiel 1) hervorragende Spreitungswerte bei gleichzeitig überragender Langzeithydrolysestabilität kombiniert zu finden sind.

### Beispiel 2

100 g (0,24 Mol) des gemäß der in Beispiel 1 beschriebenen Weise hergestellten sulfatierten Trisiloxan-Hexenol-Adduktes werden bei Raumtemperatur unter Rühren in ein Lösungsgemisch aus 15,3 g (0,26 Mol) N-Isopropylamin und 20 g Isopropanol eingetragen und 2 Stunden bei Raumtemperatur gerührt. Dabei tritt eine Ammoniak-Gasentwicklung auf und die Viskosität des cremartigen Ansatzes verringert sich mit zunehmender Reaktionszeit. Nach 2 Stunden wird der i-Propylaminüberschuß bei 50°C unter leichtem Vakuum entfernt und ein flüssigviskoses, klargelbes Endprodukt erhalten. Das Produkt löst sich wiederum sehr gut in Wasser und besitzt ebenfalls ausgezeichnete tensidische Eigenschaften.

### Beispiel 3

In analoger Art und Weise wie in Beispiel 2 beschrieben, kann das Trisiloxanhexylsulfat-Ammoniumsalz durch diverse organische Aminbasen unter Ammoniakfreisetzung in die entsprechenden Alkylammoniumsalze überführt werden. Durch diesen Modifizierungsschritt werden Produkte mit vielfältigen Eigenschaften in bezug auf Oberflächenspannungserniedrigung, Netz- und Schaumeigenschaften zugänglich, wie aus der folgenden Tabelle hervorgeht:

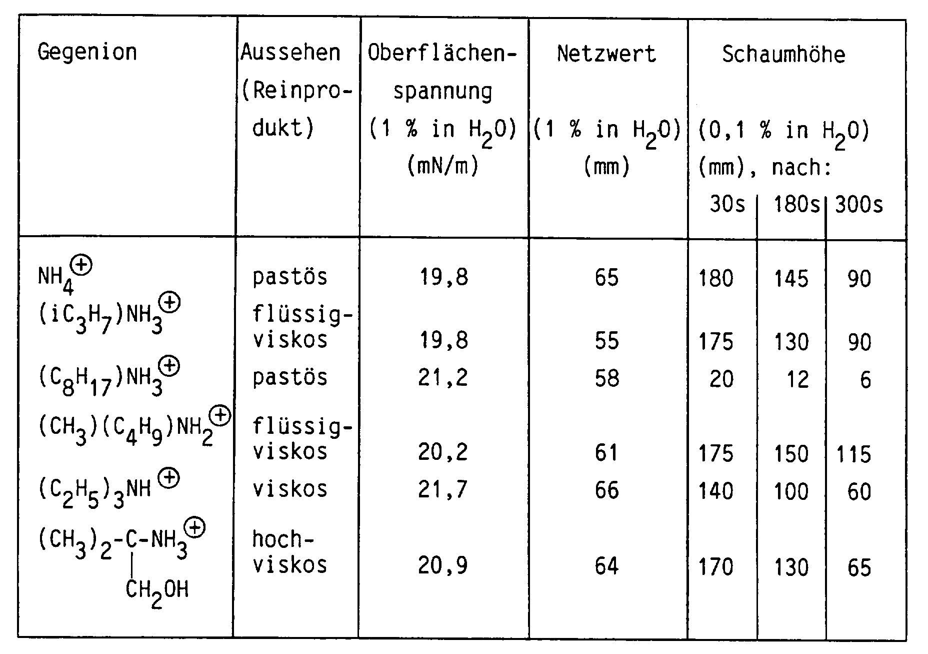

## Patentansprüche

1. Polysiloxane der allgemeinen Formel 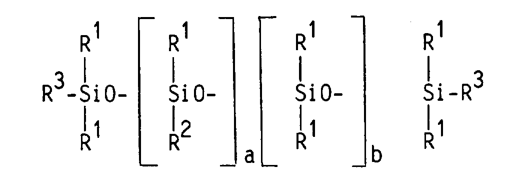
R¹ = Methyl- oder Phenylrest, wobei jedoch mindestens 90 % der R¹-Reste Methylreste sind,
R = R¹ oder
= -(CH₂)₆-OSO₃ ^{⊖} . M^{⊕},
M^{⊕} = Alkali-, 1/2 Erdalkali- oder gegebenenfalls alkylsubstituiertes Ammonium-Ion,
R³ = R¹ oder R,
mit der Maßgabe, daß im durchschnittlichen Molekül mindestens 1 Rest R oder R³ ein -(CH₂)₆-OSO₃ ^{⊖} . M^{⊕} -Rest ist,
a = 0 bis 5,
b = 0 bis 5.

2. Polysiloxane nach Anspruch 1, wobei
R¹ = Methylrest,
M^{⊕} = Alkylammonium-Ion, wobei der Alkylrest 1 bis 10 Kohlenstoffatome aufweist,
R³ = R¹,
a = 0 oder 1 und
b = 0
ist.

3. Verfahren zur Herstellung der Polysiloxane nach Anspruch 1 oder 2, dadurch gekennzeichnet, daß man Polysiloxane der allgemeinen Formel 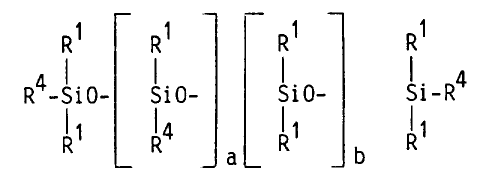
R¹, a und b wie oben definiert,
R⁴ = R¹ oder -(CH₂)₆-OH,
mit der Maßgabe, daß im durchschnittlichen Molekül mindestens 1 Rest R⁴ ein -(CH₂)₆-OH-Rest ist,
mit in Bezug auf -(CH₂)₆-OH-Gruppen mindestens äquimolaren Mengen Amidosulfonsäure bei Raumtemperatur oder mäßig erhöhter Temperatur umsetzt und gegebenenfalls das Ammonium-Ion in an sich bekannter Weise gegen das gewünschte M^{⊕}-Ion austauscht.

4. Verwendung der Polysiloxane nach Anspruch 1 oder 2 als hydrolysestabile Tenside.

## Claims

1. Polysiloxanes of the general formula 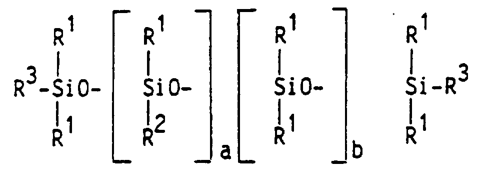 Where
R¹ = a methyl or phenyl radical, but with at least 90 % of the R¹ radicals being methyl radicals,
R = R¹ or
= -(CH₂)₆-OSO₃ ^{⊖}·M^{⊕},
M^{⊕} = alkali metal, 1/2 alkaline earth metal or unsubstituted or alkyl-substituted ammonium ion,
R³ = R¹ or R,
with the proviso that in the average molecule at least 1 radical R or R³ is a -(CH₂)₆-OSO₃ ^{⊖}·M^{⊕} radical,
a = 0 to 5,
b = 0 to 5.

2. Polysiloxanes according to Claim 1, wherein
R¹ = a methyl radical,
M^{⊕} = an alkylammonium ion, with the alkyl radical having from 1 to 10 carbon atoms,
R³ = R¹,
a = 0 or 1 and
b = 0.

3. Process for preparing the polysiloxanes according to Claim 1 or 2, characterized in that polysiloxanes of the general formula 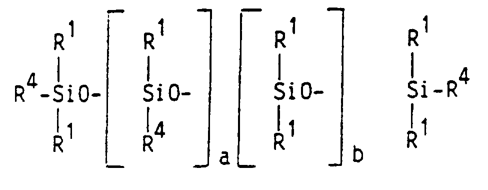 Where
R¹, a and b are as defined above,
R⁴ = R¹ or -(CH₂)₆-OH,
with the proviso that in the average molecule at least 1 radical R⁴ is a -(CH₂)₆-OH radical,
are reacted with at least equimolar amounts based on -(CH₂)₆-OH groups of amidosulphonic acid at room temperature or moderately elevated temperature and, if desired, the ammonium ion is replaced by the desired M^{⊕} ion in a manner known per se.

4. Use of the polysiloxanes according to Claim 1 or 2 as hydrolysis-stable surfactants.

## Revendications

1. Polysiloxanes répondant à la formule générale : 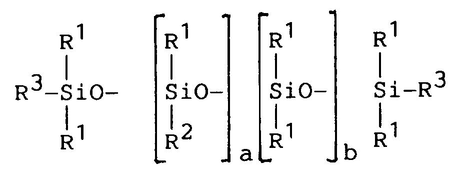
R¹ = un reste méthyle ou phényle, au moins 90 % des restes R¹ représentant le reste méthyle,
R = R¹ ou
= -(CH₂)₆-OSO₃ ^{⊖}·M^{⊕},
M^{⊕} = un ion alcalin , 1/2 alcalino-terreux ou un ion ammonium éventuellement substitué par un groupe alkyle,
R³ = R¹ ou R,
avec la condition qu'au moins 1 reste R ou R³ soit un reste -(CH₂)₆-OSO₃ ^{⊖}.M^{⊕} dans la molécule moyenne,
a = 0 à 5,
b = 0 à 5.

2. Polysiloxanes selon la revendication 1, où
R¹ = un reste méthyle,
M^{⊕} = un ion alkylammonium dont le reste alkyle contient de 1 à 10 atomes de carbone,
R³ = R¹,
a = 0 ou 1, et
b = 0.

3. Procédé de préparation des polysiloxanes selon la revendication 1 ou 2, caractérisé en ce qu'on fait réagir des polysiloxanes répondant à la formule générale : 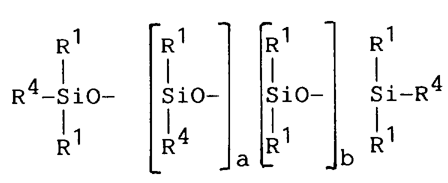 dans laquelle
R¹, a et b sont tels que définis ci-dessus,
R⁴ = R¹ ou -(CH₂)₆-OH,
avec la condition qu'au moins 1 reste R⁴ soit un reste -(CH₂)₆-OH dans la molécule moyenne,
avec des quantités au moins équimolaires, par rapport aux groupes -(CH₂)₆-OH, d'acide amidosulfonique, à la température ambiante ou à une température modérément augmentée, et éventuellement, l'ion ammonium est échangé d'une manière connue en soi contre l'ion M^{⊕} souhaité.

4. Utilisation des polysiloxanes selon la revendication 1 ou 2 comme des agents tensio-actifs stables vis-à-vis de l'hydrolyse.
